# EUROPEAN PATENT APPLICATION

(11) **EP 4 115 961 A1**
(43) Date of publication of application: **11.01.2023**
(21) Application number: 22183802.2
(22) Date of filing: 08.07.2022
(51) Int. Cl.: A63F 13/213, A63F 13/35, A63F 13/46, A63F 13/655, A63F 13/80

(54) **CARD GAME MATCHUP SYSTEM**

(30) Priority: 08.07.2021 JP 2021113447
(71) Applicant: ANGEL GROUP CO., LTD., Higashiomi-shi Shiga 527-0232 (JP)
(72) Inventor: SHIGETA, Yasushi, Shiga, 527-0232 (JP)
(74) Representative: Bardehle Pagenberg Partnerschaft mbB Patentanwälte Rechtsanwälte

(57) **Abstract**

The present invention is directed to realize an online matchup of a card game using real game cards.

A card game matchup system (101) includes: a first image acquiring portion (53) configured to acquire a first image obtained by imaging a first field where the first player places a first player' own game card to play the card game; a second image acquiring portion (54) configured to acquire a second image obtained by imaging a second field where the second player places a second player' own game card to play the card game; a first game state recognizing portion (55) configured to recognize a first game state by performing image recognition on the first image using artificial intelligence; a second game state recognizing portion (56) configured to recognize a second game state by performing image recognition on the second image using artificial intelligence; and a judging portion (57) configured to judge a state of the card game in accordance with a rule of the card game based on the first game state and the second game state.

## Description

### TECHINICAL FIELD

The present invention relates to a card game matchup system used for a card game in which multiple players respectively place game cards on a field and operate on the placed game cards.

### BACKGROUND

Conventionally, in a card game, each player places cards on a player's own field and perform various operations on the cards, thereby performing a matchup. When the players are not in the same place and play the game remotely, for example, it is expected that they possess their own cards electronically, connect to a game server through Internet, and play an online matchup (see, e.g., JP2014-226564A).

However, in the online matchup played while possessing the electronic cards, each player cannot use real (actual) game cards which each player possesses, and must use a different set of cards from that used when playing face-to-face.

### SUMMARY OF THE INVENTION

One of the purposes of the present invention is to realize an online matchup of a card game using real game cards.

In one aspect of the present invention, a card game matchup system used for a card game in which a first player and a second player each places a game card on a field and operates the placed game card, has a configuration which includes: a first image acquiring portion configured to acquire a first image obtained by imaging a first field where the first player places a first player' own game card to play the card game; a second image acquiring portion configured to acquire a second image obtained by imaging a second field where the second player places a second player' own game card to play the card game; a first game state recognizing portion configured to recognize a first game state including a state of the game card placed in the first field, by performing image recognition on the first image using artificial intelligence; a second game state recognizing portion configured to recognize a second game state including a state of the game card placed in the second field, by performing image recognition on the second image using artificial intelligence; and a judging portion configured to judge a state of the card game in accordance with a rule of the card game based on the first game state and the second game state.

In the above card game matchup system, the first game state may further include an operation on the game card in the first field by the first player, and the second game state may further include an operation on the game card in the second field by the second player.

In the above card game matchup system, the first image acquiring portion may be configured to acquire the first image by receiving the first image through a communication network, and the second image acquiring portion may be configured to acquire the second image by receiving the second image through a communication network.

In the above card game matchup system, the first image acquiring portion may be configured to acquire a plurality of first images imaged continuously while the card game is being played, as the first image, and the second image acquiring portion may be configured to acquire a plurality of second images imaged continuously while the card game is being played, as the second image.

In the above card game matchup system, the first game state recognizing portion may be configured to recognize an operation on the game card in the first field by the first player, as the first game state, based on a change of the game card in the first field, by performing the image recognition on each of the plurality of first images, and the second game state recognizing portion may be configured to recognize an operation on the game card in the second field by the second player, as the second game state, based on a change of the game card in the second field, by performing the image recognition on each of the plurality of second images.

In the above card game matchup system, the first game state recognizing portion may be configured to recognize the first game state by performing motion recognition on the plurality of first images, and the second game state recognizing portion may be configured to recognize the second game state by performing motion recognition on the plurality of second images.

In the above card game matchup system, the first game state recognizing portion may be configured to recognize the first game state in accordance with the rule of the card game based on the game card placed in the first field and/or the operation on the game card by the first player in the first field, and the second game state recognizing portion may be configured to recognize the second game state in accordance with the rule of the card game based on the game card placed in the second field and/or the operation on the game card by the second player in the second field.

In the above card game matchup system, the judging portion may be configured to judge a violation of the rule of the card game as the state of the card game in accordance with the rule of the card game based on the first game state and the second game state.

In the above card game matchup system, the judging portion may be configured to judge a matchup situation of the card game as the state of the card game in accordance with the rule of the card game based on the first game state and the second game state.

In the above card game matchup system, the judging portion may be configured to calculate scores of the first player and the second player as the state of the card game in accordance with the rule of the card game based on the first game state and the second game state.

In the above card game matchup system, the judging portion may be configured to judge a win and a loss of the card game as the state of the card game in accordance with the rule of the card game based on the first game state and the second game state.

In the above card game matchup system, the first game state recognizing portion may be configured to recognize the game card operated by the first player and a type of operation on the game card by the first player, as the first game state, and the second game state recognizing portion may be configured to recognize the game card operated by the second player and a type of operation on the game card by the second player, as the second game state.

In the above card game matchup system, the first game state recognizing portion may be configured to recognize a touching operation by the first player on the game card operated by the first player, and the second game state recognizing portion may be configured to recognize a touching operation by the second player on the game card operated by the second player.

In the above card game matchup system, the first game state recognizing portion may be configured to recognize an operation by the first player to change an orientation of the game card operated by the first player, and the second game state recognizing portion may be configured to recognize an operation by the second player to change an orientation of the game card operated by the second player.

In the above card game matchup system, the first game state recognizing portion may be configured to recognize an operation by the first player to overlap the game card operated by the first player, and the second game state recognizing portion may be configured to recognize an operation by the second player to overlap the game card operated by the second player.

In the above card game matchup system, the first game state recognizing portion may be configured to recognize an operation by the first player to turn the game card operated by the first player, and the second game state recognizing portion may be configured to recognize an operation by the second player to turn the game card operated by the second player.

In the above card game matchup system, the first game state recognizing portion may be configured to recognize an operation by the first player to move the game card operated by the first player to a predetermined area, and the second game state recognizing portion may be configured to recognize an operation by the second player to move the game card operated by the second player to a predetermined area.

In the above card game matchup system, the first game state recognizing portion may be configured to recognize a type of operation by the first player based on a hand of the first player and/or states of the game card before and after the operation.

In the above card game matchup system, the card game may be a turn-based game, and the judging portion may be configured to recognize an end of a turn of the first player in accordance with the rule of the card game based on the first game state, and recognize an end of a turn of the second player in accordance with the rule of the card game based on the second game state.

In the above card game matchup system, the card game may be a turn-based game, and the card game matchup system may further include: a first turn switching instructing portion configured such that the first player instructs a switch of a turn; and a second turn switching instructing portion configured such that the second player instructs a switch of a turn, and the judging portion is configured to switch the turn in response to an instruction to the first turn switching instructing portion and the second turn switching instructing portion.

In the above card game matchup system, the card game may be a turn-based game, the first game state recognizing portion may be configured to recognize a content of the game card placed in the first field as a state of the game card placed in the first field, the second game state recognizing portion may be configured to recognize a content of the game card placed in the second field as a state of the game card placed in the second field, and the judging portion may be configured to switch a turn based on the content of the game card placed in the first field, the content of the game card placed in the second field, and an operation to draw the game card.

In the above card game matchup system, the first game state recognizing portion may be configured to recognize a type of area on which the game card of is located, for each of a plurality of game cards, based on a relative positional relation of the plurality of game cards in the first field and/or a content of the game card in the first field, and the second game state recognizing portion may be configured to recognize a type of area on which the game card is located, for each of a plurality of game cards, based on a relative positional relation of the plurality of game cards in the second field and/or a content of the game card in the second field.

In the above card game matchup system, the first game state recognizing portion may be configured to recognize a content of the game card placed in the first field, as a state of the game card placed in the first field, the second game state recognizing portion may be configured to recognize a content of the game card placed in the second field, as a state of the game card placed in the second field, and the judging portion may be configured to recognize a target to which the game card placed in the first field affects and a target to which the game card placed in the second field affects, as the state of the card game, based on the content of the game card placed in the first field and the content of the game card placed in the second field.

In the above card game matchup system, the first game state recognizing portion may be configured to recognize a content of the game card placed in the first field, as a state of the game card placed in the first field, the second game state recognizing portion may be configured to recognize a content of the game card placed in the second field, as a state of the game card placed in the second field, and the judging portion may be configured to provide the first player and the second player with an option in the card game based on the content of the game card placed in the first field and the content of the game card placed in the second field.

In the above card game matchup system, the judging portion may be configured to further generate guide information based on the state of the card game.

The above card game matchup system may further include: the first player image acquiring portion is configured to acquire a first player image obtained by imaging the first player; and the second player image acquiring portion is configured to acquire a second player image obtained by imaging the second player, the first game state recognizing portion is configured to recognize a motion of the first player by performing image recognition on the first player image using artificial intelligence, the second game state recognizing portion may be configured to recognize a motion of the second player by performing image recognition on the second player image using artificial intelligence, and the judging portion may be configured to judge the state of the card game based on the motion of the first player and the second player.

The above card game matchup system may further include an image information generating portion configured to generate judgment screen information to indicate a judging result by the judging portion.

The above card game matchup system may further include: a third image acquiring portion configured to acquire a third image obtained by imaging a third field where the third player places a third player's own game card to play the card game; and a third game state recognizing portion configured to recognize a third game state including a state of the game card placed in the third field, by performing image recognition on the third image using artificial intelligence, and the judging portion may be configured to further judge the state of the card game based on the third game state as well.

The above card game matchup system may further include a recording device configured to record a log of the card game.

In another aspect of the present invention, a card game matchup system used for a card game in which a first player and a second player each places a game card on a field and operates the placed game card, has a configuration which includes: an image acquiring portion configured to acquire an image obtained by imaging a first field where the first player places a first player' own game card to play the card game and a second field where the second player places a second player' own game card to play the card game; a game state recognizing portion configured to recognize a game state including a state of the game cards placed in the first field and the second field, by performing image recognition on the image using artificial intelligence; and a judging portion configured to judge a state of the card game in accordance with a rule of the card game based on the game state.

In another aspect of the present invention, a card game matchup system used for a card game in which a first player and a second player each places a game card on a field and operates the placed game card, has a configuration which includes: a first image acquiring portion configured to acquire a first image obtained by imaging a first field where the first player places a first player' own game card to play the card game; a first game state recognizing portion configured to recognize a first game state including a state of the game card placed in the first field, by performing image recognition on the first image using artificial intelligence; a second game state determining portion configured to a second game state including a state of the game card of the second player, based on a random number and/or by inputting the first game state into artificial intelligence; and a judging portion configured to judge a state of the card game in accordance with a rule of the card game based on the first game state and the second game state.

In another aspect of the present invention, a card game matchup system used in a card game played by placing a game card on a field and operating on the placed game card, has a configuration which includes: a first game state determining portion configured to determine a first game state including a state of a game card of a first player; a second game state determining portion configured to determine a second game state including a state of a game card of a second player; and a judging portion configured to judge a state of the card game in accordance with a rule of the card game based on the first game state and the second game state, and in which the first game state determining portion is configured to determine the first game state to be taken next by inputting the first game state and the second game state to artificial intelligence, and the second game state determining portion is configured to determine the second game state to be taken next by inputting the first game state and the second game state to the artificial intelligence, and which further includes a learning portion configured to perform learning to the artificial intelligence based on the state of the card game.

In another aspect of the present invention, a card game matchup system used for a card game in which a first player and a second player each places a game card on a field and operates the placed game card, has a configuration in which the game card includes a built-in RFID tag configured to store a content of the game card, and which includes: a first reading portion configured to read the RFID tag within the game card in a first field where the first player places a first player's own game card to play the card game; a second reading portion configured to read the RFID tag within the game card in a second field where the second player places a second player's own game card to play the card game; and a judging portion configured to judge a matchup situation of the card game in accordance with a rule of the card game based on a reading result by the first reading portion and a reading result by the second reading portion.

### BRIEF DESCRIPTION OF DRAWINGS

Fig. 1 is a block diagram showing a configuration of a card game matchup system of a first embodiment of the present invention.
Fig. 2 is a view showing a relationship between a first player device and a first field.
Fig. 3 is a view showing an example of an image generated in the first player device according to the first embodiment of the present invention.
Fig. 4 is a view showing an example of an image generated in the second player device according to the first embodiment of the present invention.
Fig. 5 is a view showing an example of a screen displayed on a display of the first player device according to the first embodiment of the present invention.
Fig. 6 is a view showing a card placement area of the first field according to the first embodiment of the present invention.
Fig. 7A is a table showing a state of a game card placed in the first field as a first game state according to the first embodiment of the present invention.
Fig. 7B is a table showing an operation on the game card in the first field by a first player as the first game state according to the first embodiment of the present invention.
Fig. 8 is a view showing an example of a first image according to the first embodiment of the present invention.
Fig. 9 is a view showing another example of the first image according to the first embodiment of the present invention.
Fig. 10 is a view showing another example of the first image according to the first embodiment of the present invention.
Fig. 11 is a view showing another example of the first image according to the first embodiment of the present invention.
Fig. 12 is a view showing another example of the first image according to the first embodiment of the present invention.
Fig. 13 is a block diagram showing a configuration of a card game matchup system according to a second embodiment of the present invention.
Fig. 14 is a block diagram showing a configuration of a card game matchup system according to a third embodiment of the present invention.
Fig. 15 is a block diagram showing a configuration of a card game matchup system according to a fourth embodiment of the present invention.
Fig. 16 is a block diagram showing a configuration of a card game matchup system according to a fifth embodiment of the present invention.
Fig. 17 is a block diagram showing a configuration of a card game matchup system according to a sixth embodiment of the present invention.

### DESCRIPTION OF THE PREFERRED EMBODIMENTS

### (First embodiment)

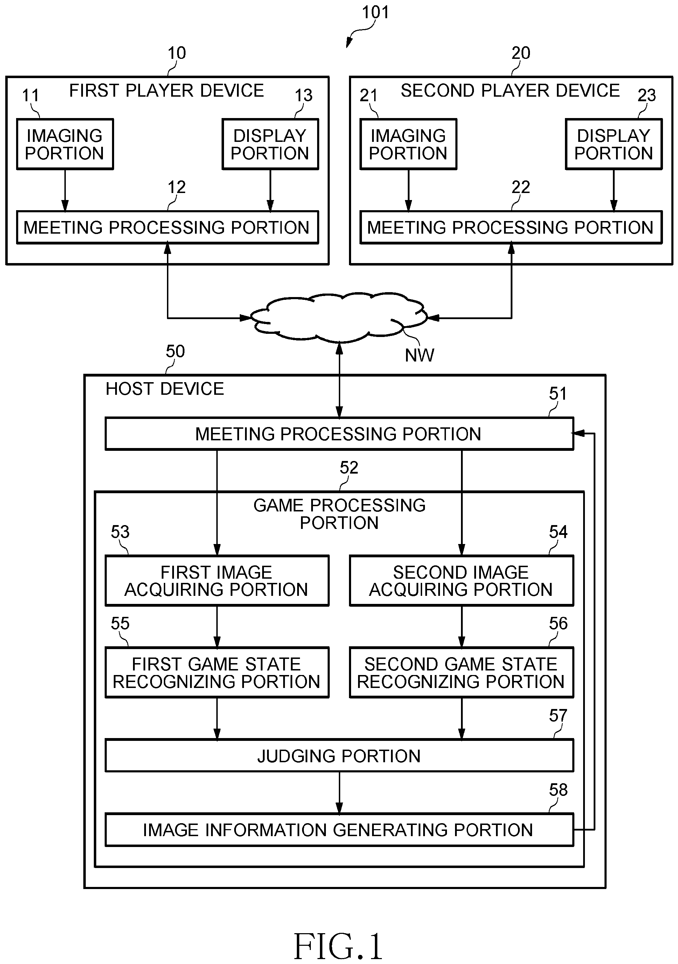

Fig. 1 is a block diagram showing a configuration of a card game matchup system according to a first embodiment of the present invention. The card game matchup system 101 according to the present embodiment is used for playing a card game matchup between a first player and a second player at locations separated from each other. The card game matchup system 101 includes a first player device 10 used by the first player, a second player device 20 used by the second player, and a host device 50 to which the first player device 10 and the second player device 20 are connected through a communication network NW. The host device 50 plays a role of a host which progress a game. The communication network NW may be Internet.

The first player device 10 includes an imaging portion 11, a meeting processing portion 12, and a display portion 13. The second player device 20 includes an imaging portion 21, a meeting processing portion 22, and a display portion 23. Since the first player device 10 and the second player device 20 have the same configuration, the first player device 10 will be described below.

The imaging portion 11 is a digital camera, and continuously images a game field of the first player to generate continuous images while the card game is being played. The meeting processing portion 12 executes a web meeting whose members are the first player device 10, the second player device 20, and the host device 50. The display portion 13 is a display which displays a screen in the Web meeting, that is, a screen provided by the second player device 20 and a screen provided by the host device 50, and a screen imaged by its own imaging portion 11.

The first player device 10 is formed of a personal computer (PC), for example. In this case, the imaging portion 11 is provided in a notebook PC, and the meeting processing portion 12 is a Web meeting service, for example, zoom (registered trademark) by Zoom Communications Inc., skype (registered trademark) by Microsoft Inc., Teams (registered trademark) by Microsoft Inc., and Meet by Google Inc., etc., and the meeting processing portion 12 is realized by executing these software on the PC. The display portion 13 is a monitor of the PC. The first player device 10 may be realized by a smartphone, a tablet terminal, or other digital device. A part of the imaging portion 11, the meeting processing portion 12, and the display portion 13 may be provided in the other device. For example, the first player device 10 is formed by connecting a web camera as the imaging portion 11 to the PC provided with the meeting processing portion 12 and the display portion 13.

The imaging portion 11 images a field on which the first player places first player's own game cards to play the card game (hereinafter referred to as the "first field") to generate a first image. The meeting processing portion 12 transmits this first image to the host device 50 and the second player device 20 through the communication network, as a screen of the first player device 10. Although omitted in Fig. 1, a web meeting server which hosts the Web meeting performed by the first player device 10, the second player device 20, and the host device 50 may be connected to the communication network NW.

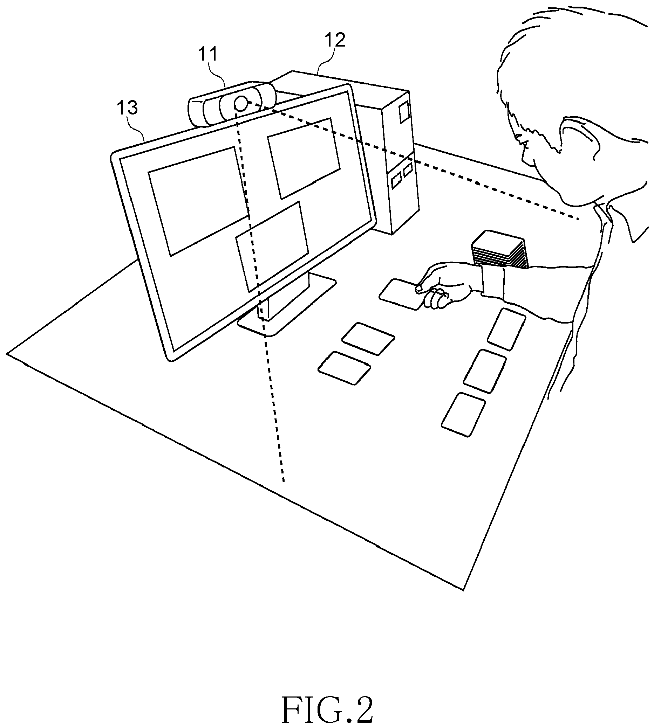

Fig. 2 is a view showing a relationship between the first player device and the first place. In an example in Figure 2, the meeting processing portion 12 is formed of a desktop computer, the display portion 13 is formed of a monitor connected to the desktop computer, and the imaging portion 11 is formed of a web camera connected to the desktop computer. The game cards are placed on a desk to form the first field, and the monitor is arranged at the back of the first field.

The web camera images the first field in front of the monitor. The player plays the game by operating the game cards in the first field in front of oneself while viewing the monitor to check a second image imaging a second field of an opponent and a host image (describe below).

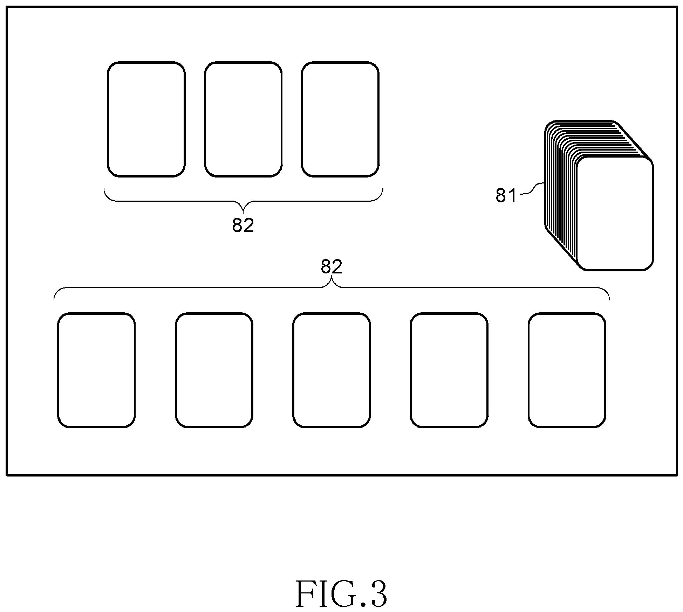

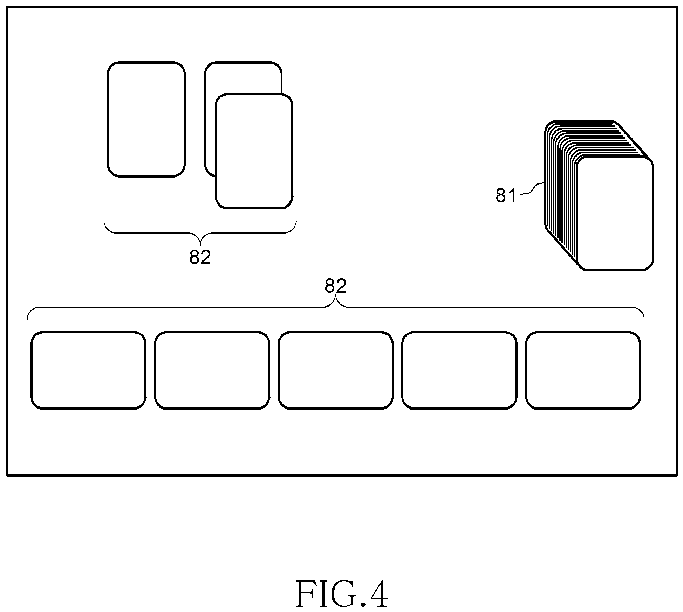

Fig. 3 is a view showing an example of an image generated in the first player device according to the first embodiment of the present invention, and Fig. 4 is a view showing an example of an image generated in the second player device according to the first embodiment of the present invention. As shown in Figs. 3 and 4, the imaging portion 11 and the imaging portion 21 image the fields of the card game of the first player and the second player, respectively. On the field, a deck 81 of cards is placed, and a card hand 82 drawn from the deck 81 of the cards as the game progresses is placed.

The meeting processing portion 12 acquires the first image generated by the imaging portion 11, and also the second image sent from the second player device 20, and the image generated by an image information generating portion 58 (described below) of the host device 50 and sent from the host device 50, and displays them together on the display portion 13.

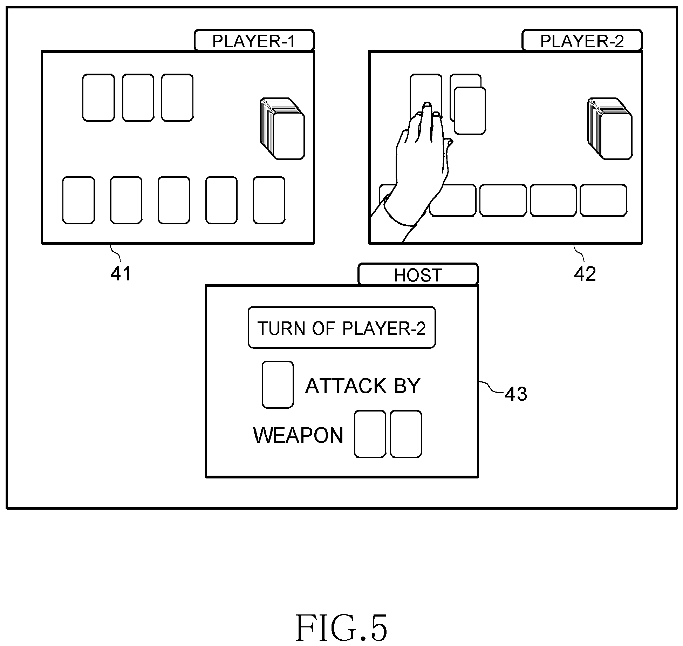

Fig. 5 a view showing an example of a screen displayed on the display portion of the first player device according to the first embodiment of the present invention. In the example of Fig. 5, the first image 41 acquired by the first player device 10, the second image 42 acquired by the second player device 20, and the host image 43 generated by the host device 50 are displayed side by side.

The host device 50 is formed of a personal computer. The host device 50 includes a meeting processing portion 51 and a game processing portion 52. The meeting processing portion 51 is the Web meeting service described above. The game processing portion 52 is realized by executing a game processing program according to the present embodiment by an arithmetic unit of the personal computer.

The game processing portion 52 includes a first image acquiring portion 53, a second image acquiring portion 54, a first game state recognizing portion 55, a second game state recognizing portion 56, judging portion 57, and an image information generating portion 58. The meeting processing portion 51 acquires the images from the first player device 10 and the second player device 20, respectively, by means of the Web meeting service, and sent them to the first image acquiring portion 53 and the second image acquiring portion 54 of the game processing portion 52, respectively.

The first image acquiring portion 53 acquires the first image obtained by imaging the first field of the first player, from the meeting processing portion 51. The second image acquiring portion 54 acquires the second image obtained by imaging the second field of the second player, from the meeting processing portion 51. The first game state recognizing portion 55 recognizes a first game state by performing image recognition on the first image using artificial intelligence. The second game state recognizing portion 56 recognizes the second game state by performing image recognition on the second image using artificial intelligence.

Since the processing for recognition of the first game state by the first game state recognizing portion 55 and the processing for recognition of the second game state by the second game state recognizing portion 56 are the same, the recognition of the first game state by the first game state recognizing portion 55 is described below. The first game state recognized by the first game state recognizing portion 55 includes a state of the game cards (the deck 81 and the card hand 82) in the first field and an operation by the first player on the game cards (the deck 81 and the card hand 82) in the first field.

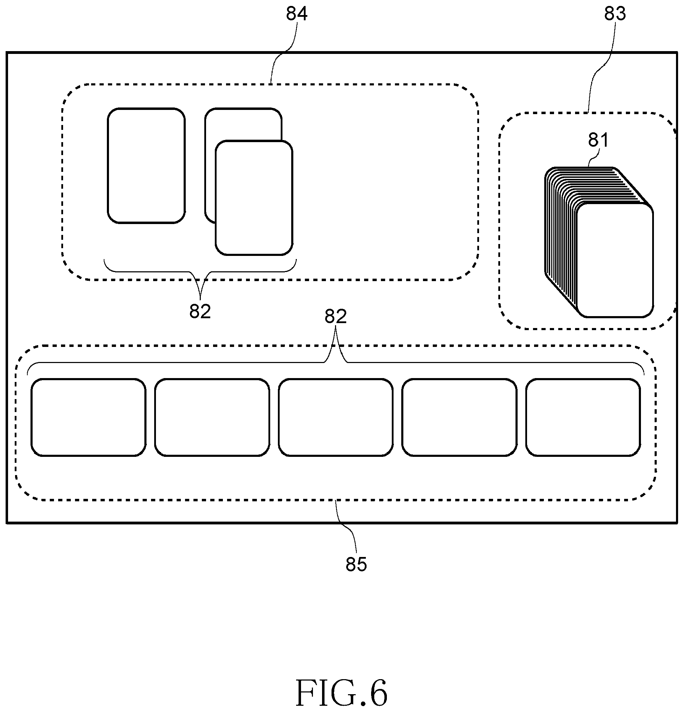

Fig. 6 is a view showing a card placement area of the first field according to the first embodiment of the present invention. The first game state recognizing portion 55 first identifies the card placement area in order to recognize the first game state in the first field. In the present embodiment, three areas of a deck area 83, a battle area 84, and a status area 85 are defined in the first field.

The first game state recognizing portion 55 first recognizes the game cards in the first image by performing image recognition on the first image. In this image recognition, the first game state recognizing portion 55 recognizes each game card using the artificial intelligence. Specifically, the first game state recognizing portion 55 extracts each game card from the first image based on machine learning in which the back side surface and the front side surface of the game card are learned. The same pattern is provided on the back side surface of each game card, and one of multiple types of characters and a character characteristic thereof are drawn on the front side surface of the game card.

For this machine learning, a neural network such as a convolutional neural network (CNN), for example, may be used. In this case, this neural network has learned the front side surfaces of multiple types of game cards, and when the front side surface of the game card is shown in the first image, it is possible to identify the type (the character) of the game card. The first game state recognizing portion 55 includes a database for each game card, and when the game card in the first image is identified, it is possible to identify the characteristic of this game card in the first image referring to the database.

Next, the first game state recognizing portion 55 recognizes each area 83-85 in the first image from relative positional relationships of each recognized game card. The areas 83-85 may be fixed in the first image. In this case, the first player adjusts position and orientation of the imaging portion 11 so that the corresponding game cards are positioned in the areas 83-85 fixed in the first image, and images the first field.

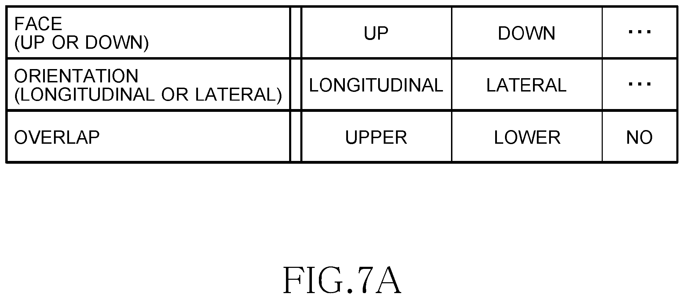

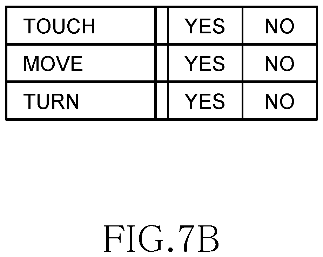

Fig. 7A is a table showing states of the game card placed in the first field as the first game state according to the first embodiment of the present invention, and Fig. 7B is a table showing operations by the first player on the game card in the first field as the first game state according to the first embodiment of the present invention.

As shown in Fig. 7A, the first game state recognizing portion 55 recognizes, for each game card, as the stat of the game card, whether the game card is face-up or face-down, whether the game card is oriented longitudinally or laterally, and whether the game card is overlapped on another game card (upper), another game card (lower), or no game card. As shown in Fig. 7B, the first game state recognizing portion 55 recognizes, for each game card, as the operation on the game card, whether presence or absence of a touching operation, a moving operation and a turning operation. These recognition of the state of the game card and the operation on game card are described in detail below.

The first game state recognizing portion 55 (1) recognizes the game state by performing image recognition on a single first image (a still image), (2) recognizes the game state by performing image recognition on multiple first images (still images) and detecting changes therebetween, or (3) recognizes the game state by performing motion recognition on multiple first images.

### (1) Recognition of game state by image recognition on single first image

When the first game state recognizing portion 55 recognizes the back side surface of the game card in image recognition, it recognizes that the game card is placed face-down. Moreover, when the first game state recognizing portion 55 recognizes the specific type (character) of the game card in image recognition, it recognizes that the game card is placed face-up.

The first game state recognizing portion 55 compares the lateral length and the longitudinal length of the game card recognized by image recognition in the first image and recognizes whether the game card is oriented longitudinally or laterally. That is, the first game state recognizing portion 55 recognizes that the game card is oriented longitudinally, when the longitudinal length is longer than the lateral length of the recognized game card, and recognizes that the game card is oriented laterally, when the lateral length is longer than the longitudinal length of the recognized game card.

The first game state recognizing portion 55 determines whether or not multiple game cards are overlapped based on the distance between specified points (for example, the upper left corner) of the game cards recognized in image recognition. When the distance between the upper left corners of the two game cards is shorter than the longitudinal and lateral lengths of the card, the first game state recognizing portion 55 recognizes that the two game cards are overlapped. Then, the first game state recognizing portion 55 recognizes that the entirely visible game card is placed on the upper side and the partially hidden game card is placed on the lower side.

In machine learning used for image recognition, the partially hidden game card can be learned, or only the part on the upper side or the part on the lower side of the game card can be learned, such that the lower game card can be recognized even when the game cards are overlapped. In the case where an area of each game card is segmented in image recognition, for example, by semantic segmentation, the overlap can be recognized directly in image recognition.

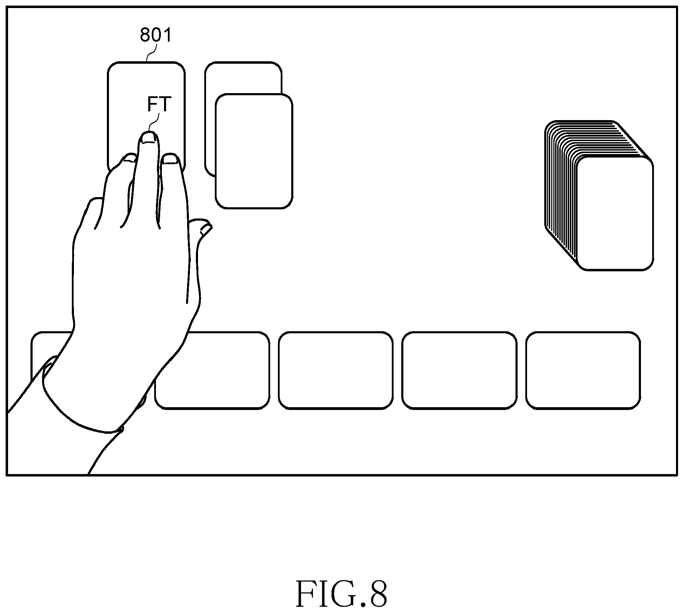

Fig. 8 is a view showing an example of the first image according to the first embodiment of the present invention. In the example of Fig. 8, the first player is touching the game card 801. The first game state recognizing portion 55 performs image recognition on this first image to recognize the touch to the game card 801. Specifically, the first game state recognizing portion 55 recognizes the game card 801 and the fingertip FT in the first image, and recognizes that the game card 801 on which the fingertip FT exists is being touched.

### (2) Recognition of game state by detecting changes in multiple first images (still images)

The operation by the first player on the game card, such as a touch, a move, and a turn, can be recognized by detecting change between two first images. That is, content, orientation, area, etc. of the game card in the first field is recognized at a certain time t, and then the contents, orientation, area, etc. of the game card in the same first field is recognized at a later time t+1, it is recognized that a turning operation is performed with respect to the game card whose face of up and down is changed, a moving operation is performed with respect to the game card whose position is changed, and a touching operation is performed with respect to the game card on which the hand is not recognized at the time t but the hand touches at the time t+1.

### (3) Recognition of game state by motion recognition

The first game state recognizing portion 55 recognizes a motion by the hand of the first player in the first image using a neural network for motion recognition such as, for example, a recurrent neural network (RNN), a long short term memory (LSTM), a 3D-CNN. The first game state recognizing portion 55 can recognize not only an operation by the first player on the game card, such as a touch, a move, and a turn, but also the state of the game card, such as a face of up and down, an orientation of longitudinal and lateral, and an overlap.

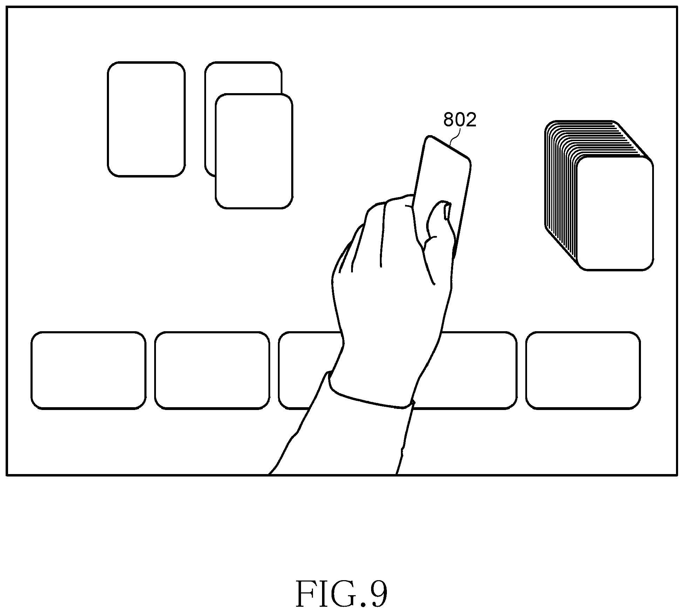

Fig. 9 is a view showing an example of the first image according to the first embodiment of the present invention. In the example of Fig. 9, a game card 802 is turned over by the first player, and the first game state recognizing portion 55 recognizes the turning operation of the hand of the first player by analyzing multiple consecutive first images (a movie) before and after this first image.

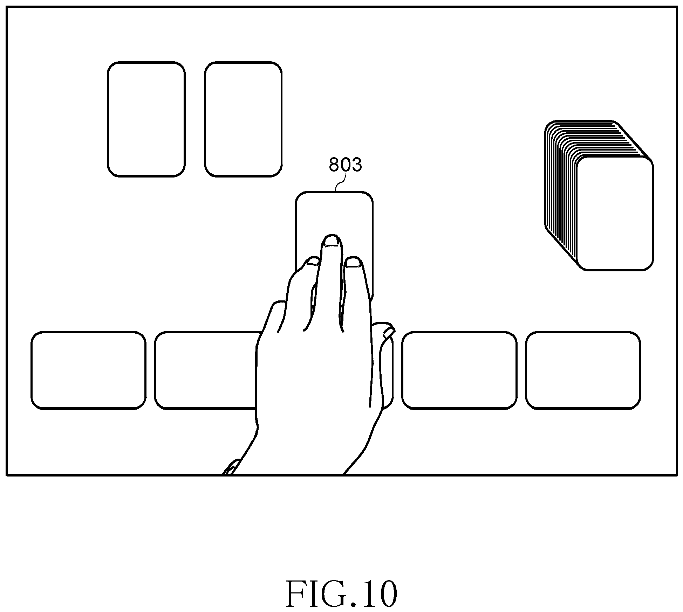

Fig. 10 is a view showing an example of the first image according to the first embodiment of the present invention. In the example of Fig. 10, a game card 803 is moved by the first player, and the first game state recognition portion 55 recognizes the moving operation by the hand of the first player by analyzing multiple consecutive first images (a movie) before and after this first image.

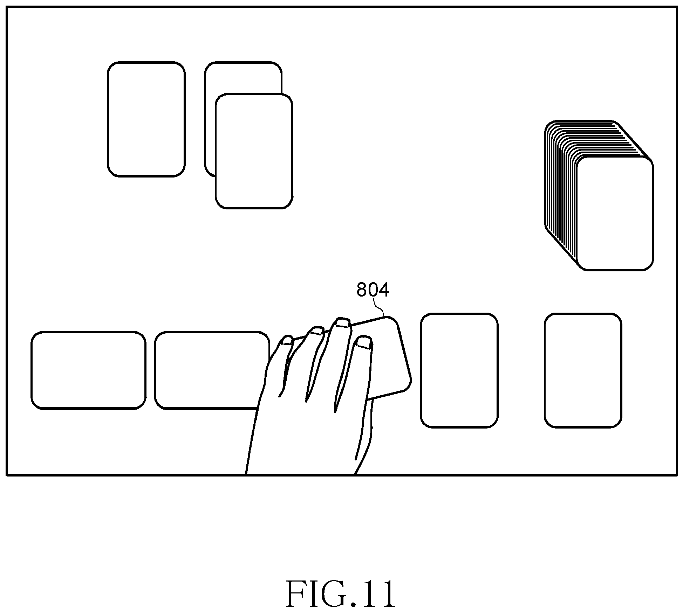

Fig. 11 is a view showing an example of the first image according to the first embodiment of the present invention. In the example of Fig. 11, an orientation of a game card 804 is changed by the first player, and the first game state recognizing portion 55 recognizes the orientation changing operation by the hand of the first player and recognizes the orientation (longitudinal and lateral) of the game card corresponding to this operation, by analyzing multiple consecutive first images (a movie) before and after this first image.

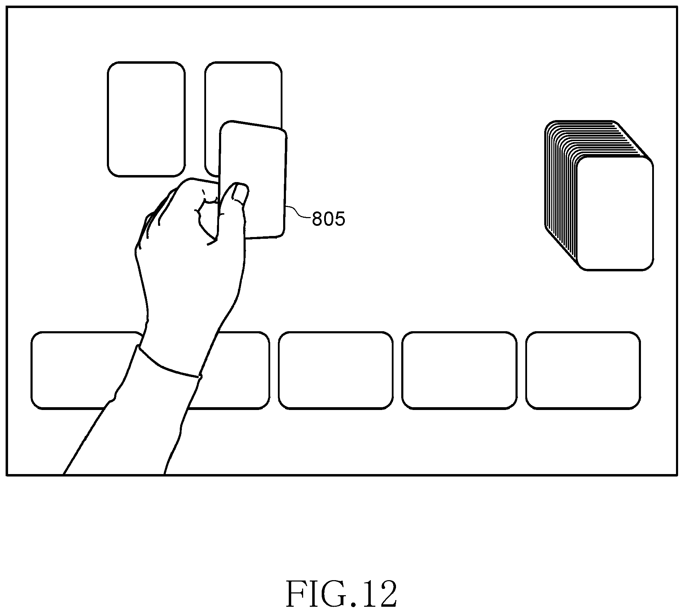

Fig. 12 is a view showing an example of the first image according to the first embodiment of the present invention. In the example of Fig. 12, a game card 805 is overlapped on another game card by the first player, and the first game state recognizing portion 55 recognizes the overlapping operation by the hand of the first player and recognizes the overlap of the game card corresponding to this operation, by analyzing multiple consecutive first images (a movie) before and after this first image.

As described above, the first game state recognizing portion 55 recognizes the first game state including the state of the game card in the first field and the operation on the game card by the first player, by means of the image recognition, the comparison between the image recognition results, and the motion recognition. The first game state recognizing portion 55 outputs the recognized first game state to the judging portion 57. The second game state recognizing portion 55 also recognizes a second game state including states of the game cards in the second field and operations on the game cards by the second player, by means of image recognition, a comparison between image recognition results, and a motion recognition, and outputs the recognized second game state to the judging portion 57.

The judging portion 57 judges a state of the card game based on the first game state and the second game state in accordance with rules of the card game. Specifically, the judging portion 57 judges a violation of the rules of the card game as the state of the card game in accordance with the rules of the card game based on the first game state and the second game state. In this case, the judging portion 57 determines operations which the first player and the second player can and cannot perform in each scene of the game, and judges the rule violation when the operation which they cannot perform is performed in the first game state or the second game state.

The judging section 57 also judges a win and a loss of the card game as the card game state in accordance with the rules of the card game based on the first game state and the second game state. In this case, the rules stored in the judging portion 57 include criteria for judging the win and the loss, and the judging portion 57 judges which of the players wins or losses in the first game state and the second game state in light of the criteria for judging the win and the loss. In the case where the card game is a form of game in which points are got or points (life points) are spent, the judging portion 57 calculates an increase and a decrease of the points of each player in accordance with the rules based on the first game state and the second game state. Then, the win and the loss are judged in accordance with the points which the first player and the second player have respectively.

In the case where the card game is turn-based, the judging portion 57 also judges which turn of the first player and the second player it is based on the first game state and the second game state. The rules stored in the judging portion 57 includes criteria for changing the turn, and the judging portion 57 judges whether or not to transfer the turn to the other player in light of this criteria for changing the turn based on the card state of the player whom the turn is given to.

The image information generating portion 58 generates screen information reflecting the judgment result by the judging portion 57 and outputs it to the meeting processing portion 51. The meeting processing portion 51 sends this screen information to the first player device 10 and second player device 20 as the host image of the host device 50. Thereby, as shown in Fig. 5, the display portion 13 of the first player device 10 and the display portions 23 of the second player device 20 display the first image 41 of the first player device 10, the second image 42 of the second player device 20, and the host image 43 generated by the host device 50.

As shown in Fig. 5, the host image 43 shows the game state of the player whom the turn is given to along with which turn of the players it is. Specifically, the example shown in Fig. 5 shows a state in which the second player attacks using a weapon, and content of the game card used for the attack and the game cards used as the weapon. In addition to this, the host image 43 may also show the points of the first player and the second player, and show the win and loss result, and the rule violation, when the judging portion 57 judges the win and the loss, and the rule violation.

As described above, the card game matchup system according to the present embodiment allows to play the card game matchup using the real (actual) game cards even when the players are separated from each other. Moreover, there is no need to prepare a special card game matchup server for such online card game matchup, and it is possible to use a general Web meeting system. That is, the first player device 10, the second player device 20, and the host device 50 may connect to the general Web meeting system as normal meeting participants, and the card game matchup system 101 described above can be realized simply by operating the host device 50 using a program according to the embodiment of the present invention

In the case where the card game is a form of game played by three or more players, the card game matchup system can be realized as is similar to described above by adding the similar player devices to the first player device 10 and the second player device 2.

### (Second embodiment)

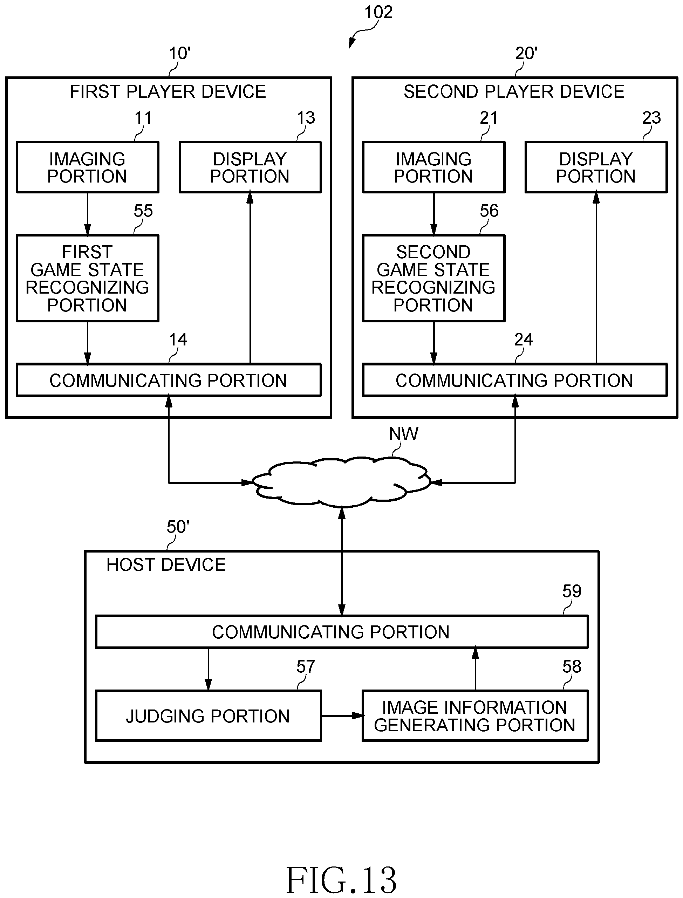

Fig. 13 is a block diagram showing a configuration of a card game matchup system according to a second embodiment of the present invention. In the card game matchup system 102 shown in Fig. 13, the similar components to those of the card game matchup system 101 according to the first embodiment are given the same number, and detailed descriptions thereof are omitted.

The card game matchup system 102 includes a first player device 10', a second player device 20', and a host device 50'. Since the first player device 10' and the second player device 20' have the same configuration, the first player device 10' is described. The first player device 10' incudes an imaging portion 11, a first game state recognizing portion 55, a display portion 13, and a communicating portion 14. In the first embodiment, the general web meeting system is used, but in the present embodiment, the first player device 10', the second player device 20', and the host device 50' perform various processing and communication with each other by each executing a program according to the present embodiment.

The first game state recognizing portion 55 recognizes the first game state by performing image recognition on the first image generated by the imaging portion 11, as is similar to in the first embodiment. The communicating portion 14 transmits the first game state recognized by the first game state recognizing portion 55 along with the first image obtained by the imaging portion 11 to the host device 50.

In the host device 50', a communicating portion 59 receives the first image and the first game state transmitted from the first player device 10', a second image and a second game state transmitted from the second player device 20'. A judging portion 57 judges a state of a card game based on the first game state and the second game state. An image information generating portion 58 generates a host image based on the judgment result by the judging portion 57. The communicating portion 59 transmits the second image and the host image to the first player device 10' and transmits the first image and the host image to the second player device 20'.

The card game matchup system 102 according to the present embodiment also allows that the first player and the second player who are located separately from each other play an online matchup of a card game using non-electrical real game cards.

### (Third embodiment)

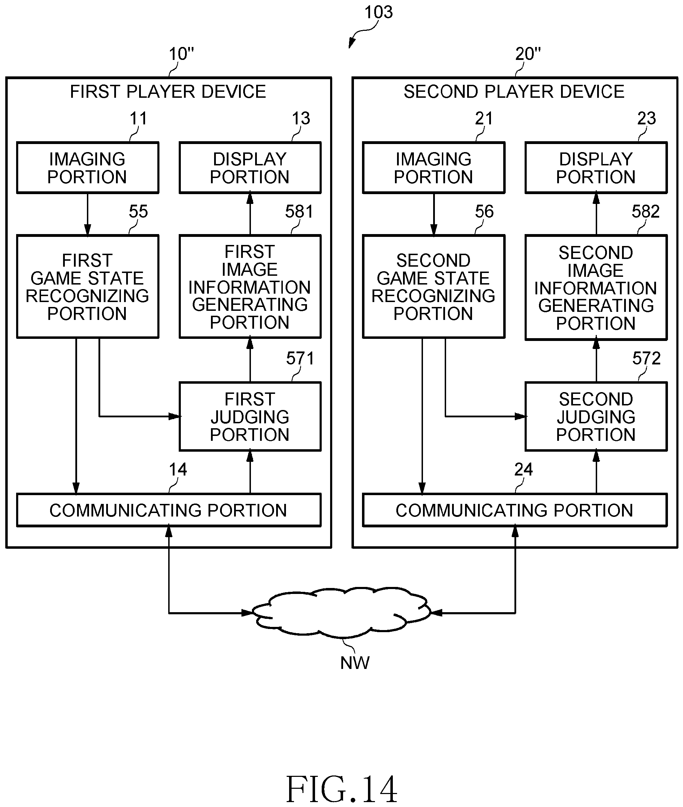

Fig. 14 is a block diagram showing a configuration of a card game matchup system according to a third embodiment of the present invention. The card game matchup system 103 according to the present embodiment includes a first player device 10" and a second player device 20". In the card game matchup system 103, the similar components to those of the card game matchup system 101, 102 are given the same numbers, and detailed descriptions thereof are omitted. The first player device 10" and the second player device 20" have the same configuration.

The first player device 10" includes an imaging portion 11, a first game state recognizing portion 55, a first judging portion 571, a communicating portion 14, a first image information generating portion 581, and a display portion 13. The second player device 20" includes an imaging portion 21, a second game state recognizing portion 56, a second judging portion 572, a communicating portion 24, a second image information generating portion 582, and a display portion 23. The first game state recognizing portion 55 recognizes a first game state by performing image recognition on a first image generated by the imaging portion 11. The second game state recognizing portion 56 recognizes a second game state by performing image recognition on a second image generated by the imaging portion 21.

The first player device 10" and the second player device 20" is realized by executing a card game matchup program according to the present embodiment on a note PC.

The communicating portion 14 transmits the first image and the first game state to the second player device 20" through a communication network NW, and the communicating portion 24 transmits the second image and the second game state to the first player device 10" through the communication network NW. The first judging portion 571 judges a state of a card game base on the first game state recognized by the first game state recognizing portion 55 and the second game state received by the communicating portion 14 from the second player device 20". This judging process is the similar to the process of the judging portion 57 according to the first and second embodiments. The second judging portion 572 similarly judges the state of the card game based on the second game state recognized by the second game state recognizing portion 56 and the first game state received by the communicating portion 24 from the first player device 10". This judging process is also similar to the process of the judging portion 57 according to the first and second embodiments.

The first image information generating portion 581 generates a host image based on the judging result by the first judging portion 571. The display portion 13 displays a screen including the host image generated by the first image information generating portion 581, the second image received by the communicating portion 14 from the second player device 20", and the first image generated by the imaging portion 11. The second image information generating portion 582 similarly generates the host image based on the judging result by the second judging portion 572. The display portion 23 displays a screen including the host image generated by the second image information generating portion 582, the first image received by the communicating portion 24 from the first player device 10", and the second image generated by the imaging portion 21.

The card game matchup system 103 according to the present embodiment does not need the host device, and can be formed of the first player device 10" and the second player device 20".

### (Fourth Embodiment)

In the above embodiments, the card game matchup system is a system used when the first player and the second player play against each other, but instead of this or in addition to this, a card game matchup system may be a system in which a first player can play against a computer player. That is, the card game matchup system may be a card game matchup system used for a card game in which the first player places game cards on the field and operates on the placed game cards.

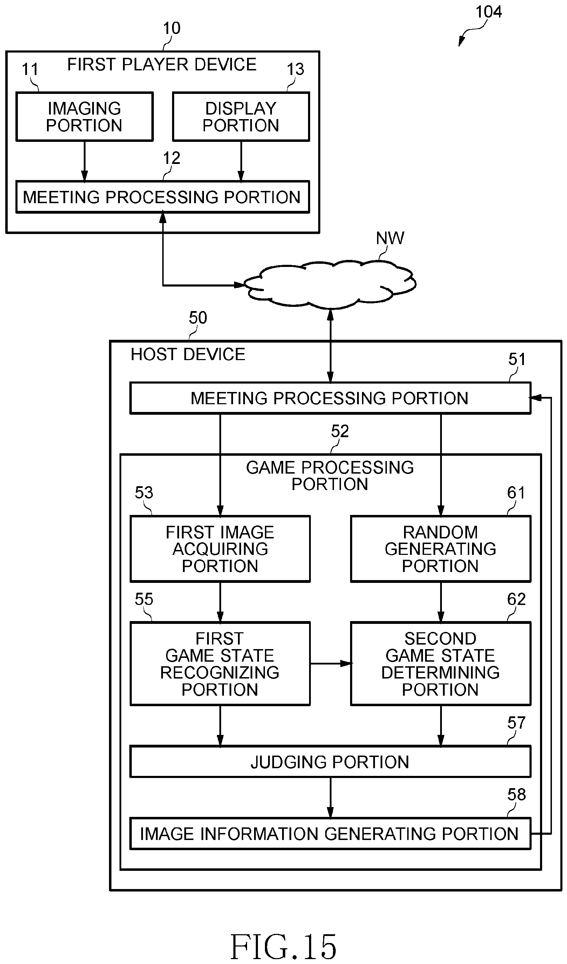

Fig. 15 is a block diagram showing a card game matchup system according to a fourth embodiment of the present invention. The card game matchup system 104 is formed of a first player device 10 and a host device 50. Compared to the card game matchup system 101 according to the first embodiment, the card game matchup system 104 does not includes the second player device 20. Also, the host device 50 according to the present embodiment does not include the second image acquiring portion and the second game state recognizing portion, but instead includes a random generating portion 61 which generates random numbers, and a second game state determining portion 62 which determines a second game state including a state of a game card of a second player as the computer player, based on the random numbers generated by the random portion 61 and/or by inputting a first game state to artificial intelligence.

The card game matchup system 104 includes a first image acquiring portion 53 which acquires a first image obtained by imaging a first field in which the first player places first player's own game cards to play a card game, for the first player, and a first game state recognizing portion 55 which recognizes the first game state including a state of the game cards placed in the first field, by performing image recognition on the first image using the artificial intelligence.

That is, in the above embodiments, the second game state is determined based on the game cards placed in the second field by the second player and the operations by the second player on them, but in the present variant example, the second game state is determined by the calculation by the second game state determining portion 62.

The judging portion 57 judges a state of the card game in accordance with rules of the card game based on the first game state recognized by the first game state recognizing portion 55 and the second game state determined by the second game state determining portion 62. The card game matchup system 104 according to the present embodiment allows that a player with real game cards plays against a computer player using those real game cards.

### (Fifth embodiment)

In the fourth embodiment, the computer player plays against the real player, but these computer players may play against each other to perform learning of a game state determining portion which determines a game state by computer operation.

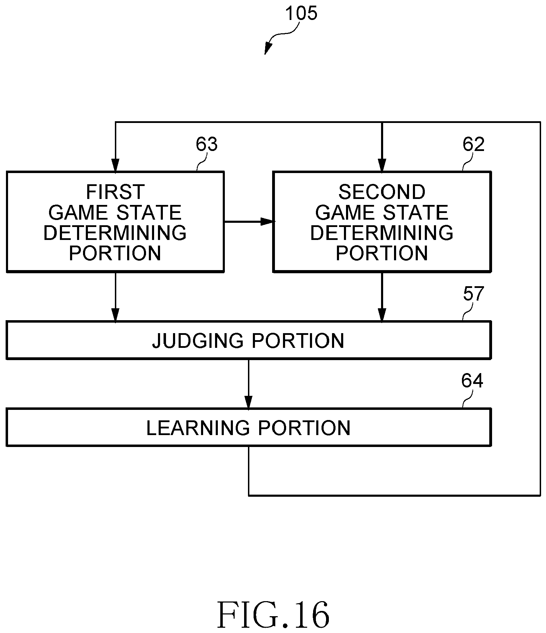

Fig. 16 is a block diagram showing a card game matchup system according to a fifth embodiment of the present invention. The card game matchup system 105 is a card game matchup system used for a card game played by placing game cards on the field and operating on the placed game cards. The card game matchup system 105 includes a first game state determining portion 63 which determines a first game state including a state of game cards of a first player, and a second game state determining portion 63 which determines a second game state including a state of game cards of a second player. The first game state determining portion 63 determines the first game state to be taken next by inputting the first game state and the second game state to artificial intelligence. The second game state determining portion 62 determines the second game state to be taken next by inputting the first game state and the second game state to artificial intelligence.

The card game matchup system 105 further includes a judging portion 57 which judges a state of the card game in accordance with rules of the card game based on the first game state and the second game state, and a learning portion 64 which performs learning of the artificial intelligence based on the card game state judged by the judging portion 57. The artificial intelligence learned in the learning section 64 is used in the first game state determining portion 63 and the second game state determining portion 62.

### (Sixth embodiment)

In the above embodiments, the first game state and the second game state are recognized by imaging the real game cards placed in the first field and the second field to generate the images, and analyzing the images. Alternatively, a game state with the real game cards may be recognized using RFID. In this case, each game card includes a built-in RFID tag which stores its content.

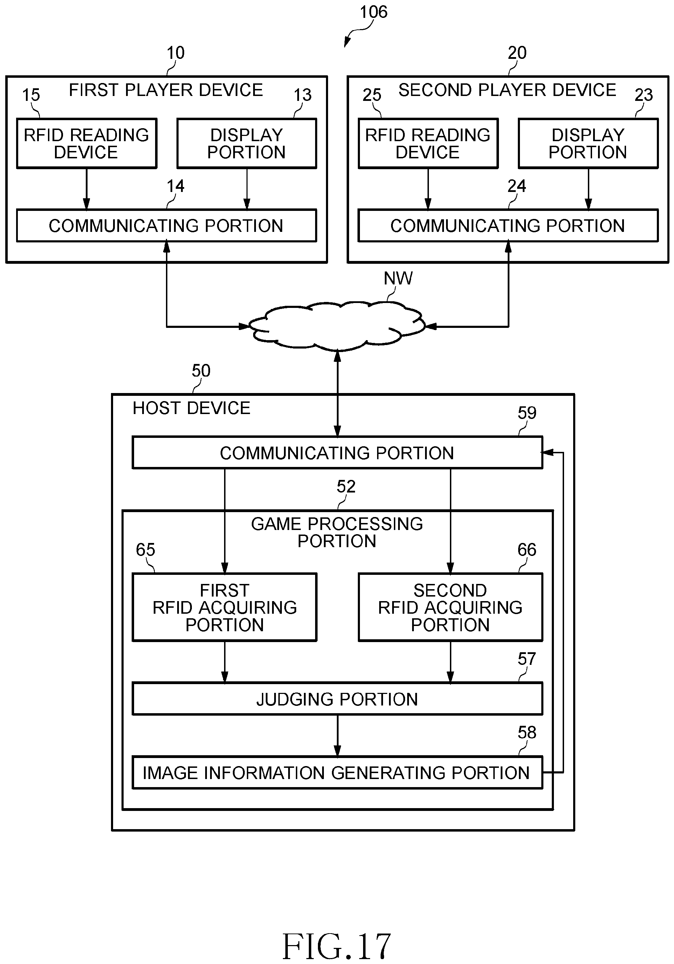

Fig. 17 is a block diagram showing a card game matchup system according to a sixth embodiment of the present invention. The card game matchup system 106 according to the present embodiment reads RFIDs of a first field, reads RFIDs of a second field, and judges a matchup situation of a card game base on the reading results of the first field and the second fields. The card game matchup system 106 is used for a card game in which a first player and a second player respectively place game cards on the field and operate on the placed game cards.

The card game matchup system 106 includes a first player device 10, a second player device 20, and a host device 50. The first player device 10 includes a RFID reading device 15 which reads RFID tags of game cards of the first field in which the first player places first player's own game cards to play the card game, a display portion 13, and a communicating portion 14. The second player device 20 includes a RFID reading device 25 which reads RFID tags of game cards of the second field in which the second player places second player's own game cards to play the card game, a display portion 23, and a communicating portion 24.

The host device 50 includes a communicating portion 59 and a game processing portion 52. The game processing portion 52 includes a first RFID acquiring portion 65 which acquires the reading results by the RFID reading portion 15, a second RFID acquiring portion 66 which acquires the reading results by the RFID reading portion 25. The judging portion 57 judges the matchup situation in accordance with rules of the card game based on the reading result of the RFID reading portion 15 and the reading result of the RFID reading portion 25.

The present embodiment allows to grasp the first game state of the first field and the second game state of the second field by using the RFID tag embedded in the game card and the RFID reading device, instead of using the camera and the image recognition.

### (Variant example)

In the first to third embodiments described above, one imaging portion (camera) is used for one player to image the field of the player, but in addition to this, the first and second player device may include an imaging portion (camera) for imaging the player. This imaging portion images a movement of the player. A first and second game state recognizing portion 55 and 56 performs image recognition on the player image obtained by imaging by using artificial intelligence, and recognize the movement of the player, and a judging portion 57 judges a game state by using the recognition result as well.

In the first to third embodiments described above, an example in which the multiple players located separately play the online card game matchup is described, but the multiple players may be in the same location to play the card game. In this case, one imaging portion may image the first field and the second field to judge a game state by using it. In this case, one game state recognizing portion performs image recognition on the imaged image to recognize the game state of the first player and the game state of the second player. A judging portion judges a card game state by using each recognized game state of the first player and the second player, and an image information generating portion generates a host image which reflects the judgment result of the judging portion.

In this case, only one display may also be provided in a position where both the first player and the second player can see it, or the display portion may be provided so that spectators watching the game played by the first player and the second player can see it. The host image may be displayed in the display portion along with the images imaging the first field and the second field, or only the host image may be displayed.

The judging portion 57 may also judge a matchup situation of the card game as the card game state in accordance with rules of the card game based on the first game state and the second game state. The matchup situation of the card game may be, for example, information indicating whether and to what extent the first player or the second player have an advantage. The judging portion 57 may also calculate each score of the first player and the second player as the state of the card game in accordance with the rules of the card game based on the first game state and the second game state. The image information generating portion 58 may generate the host image 43 including these matchup situation and scores.

Although the above embodiments recognize the end of the turn of each player based on the first game state and the second game state and switch the turn, the turn switching is not limited to this. For example, the card game matchup system may further include a first turn switching instructing device by which the first player instructs the turn switching and a second turn switching instructing device by which the second player instructs the turn switching. These first turn switching instructing device and the second turn switching instructing device may be provided as separate devices from the first player device 10 and the second player device 20, or the first turn switching instructing device may be provided as a function of the first player device 10 and configured in the first player device 10 by software, and the second turn switching instructing device may be provided as a function of the second player device 20 and configured in the second player device 20 by software. In this case, a judging portion 57 may switch the turn in response to instructions to the first switching instructing devices and the second turn switching instructing devices.

In the case where the card game is a turn-based game, a first game state recognizing portion 55 may recognize contents of game cards placed in a first field as a state of the game cards placed in the first field, a second game state recognizing portion 56 may recognize contents of game cards placed in a second field as a state of the game cards placed in the second field. In this case, a judging portion 57 may switch a turn based on the contents of the game cards placed in the first field, the contents of the game cards placed in the second field, and operations to draw the game cards.

In the case where the first game state recognizing portion 55 recognizes the contents of the game cards placed in the first field and the second game state recognizing portion 56 recognizes the contents of the game cards placed in the second field, a judging portion 57 recognize a target to which a game card placed in the first field affects and a target to which a game card placed in the second field affects based on a content of the game card placed in the first field and a content of the game card placed in the second field. For example, in the case where a content of a game card of an opponent to which an attack affects is limited by the content of the game card, it may be recognized which game cards in the second field the attack affects by the game card placed in the first field. In this case, an image information generating portion 58 may also generate a host image 43 indicating the game card to affect and the game card recognized as the target to be affected by this game card.

In the case where the first game state recognizing portion 55 recognizes the content of the game card placed in the first field and the second game state recognizing portion 56 recognizes the content of the game card placed in the second field, a judging portion 57 may present a first player and a second player with an option in a card game based on the content of the game card placed in the first field and the content of the game card placed in the second field. In this case, the image information generating portion 58 may also generate a host image 43 which presents the option.

A judging portion 57 may further generate guide information based on a state of a card game. A image information generating portion 58 may generate a host image 43 including the guide information. Here, the guide information may be, for example, information guiding a first player or a second player on next action to be taken or which can be taken.

A card game matchup system may further include a recording device which records a log of the card game. The card game matchup system may further include a rating device which rates each player according to the log recorded in this recording device.

Moreover, each component in the first to sixth embodiments and the variant examples thereof described above can be combined appropriately as long as they do not contradict each other.
101, 102, 103
Card game matchup system
10
First player device
20
Second player device
11, 21
Imaging portion
12, 22, 51
Meeting processing portion
13, 23
Display portion
14, 24
Communicating portion
15, 25
RFID reading portion
50
Host device
52
Game processing portion
53
First image acquiring portion
54
Second image acquiring portion
55
First game state recognizing portion
56
Second game state recognizing portion
57
Judging portion
58
Image information generating portion
61
Random generating portion
62
Second game state determining portion
63
First game state determining portion
64
Learning portion
65
First RFID acquiring portion
66
Second RFID acquiring portion
81
Deck
82
Card hand
83
Deck area
84
Battle area
85
Status area
41 First image
42 Second image
43 Host image

### Further embodiments of the invention are:

1. A card game matchup system used for a card game in which a first player and a second player each places a game card on a field and operates the placed game card, comprising:
   a first image acquiring portion configured to acquire a first image obtained by imaging a first field where the first player places a first player' own game card to play the card game;
   a second image acquiring portion configured to acquire a second image obtained by imaging a second field where the second player places a second player' own game card to play the card game;
   a first game state recognizing portion configured to recognize a first game state including a state of the game card placed in the first field, by performing image recognition on the first image using artificial intelligence;
   a second game state recognizing portion configured to recognize a second game state including a state of the game card placed in the second field, by performing image recognition on the second image using artificial intelligence; and
   a judging portion configured to judge a state of the card game in accordance with a rule of the card game based on the first game state and the second game state.
2. The card game matchup system according to embodiment 1,
   wherein the first game state further includes an operation on the game card in the first field by the first player, and the second game state further includes an operation on the game card in the second field by the second player.
3. The card game matchup system according to embodiment 1,
   wherein the first image acquiring portion is configured to acquire the first image by receiving the first image through a communication network, and
   the second image acquiring portion is configured to acquire the second image by receiving the second image through a communication network.
4. The card game matchup system according to embodiment 1,
   wherein the first image acquiring portion is configured to acquire a plurality of first images imaged continuously while the card game is being played, as the first image, and
   the second image acquiring portion is configured to acquire a plurality of second images imaged continuously while the card game is being played, as the second image.
5. The card game matchup system according to embodiment 4,
   wherein the first game state recognizing portion is configured to recognize an operation on the game card in the first field by the first player, as the first game state, based on a change of the game card in the first field, by performing the image recognition on each of the plurality of first images, and
   the second game state recognizing portion is configured to recognize an operation on the game card in the second field by the second player, as the second game state, based on a change of the game card in the second field, by performing the image recognition on each of the plurality of second images.
6. The card game matchup system according to embodiment 4,
   wherein the first game state recognizing portion is configured to recognize the first game state by performing motion recognition on the plurality of first images, and
   the second game state recognizing portion is configured to recognize the second game state by performing motion recognition on the plurality of second images.
7. The card game matchup system according to embodiment 2,
   wherein the first game state recognizing portion is configured to recognize the first game state in accordance with the rule of the card game based on the game card placed in the first field and/or the operation on the game card by the first player in the first field, and
   the second game state recognizing portion is configured to recognize the second game state in accordance with the rule of the card game based on the game card placed in the second field and/or the operation on the game card by the second player in the second field.
8. The card game matchup system according to embodiment 1,
   wherein the judging portion is configured to judge a violation of the rule of the card game as the state of the card game in accordance with the rule of the card game based on the first game state and the second game state.
9. The card game matchup system according to embodiment 1,
   wherein the judging portion is configured to judge a matchup situation of the card game as the state of the card game in accordance with the rule of the card game based on the first game state and the second game state.
10. The card game matchup system according to embodiment 1,
   wherein the judging portion is configured to calculate scores of the first player and the second player as the state of the card game in accordance with the rule of the card game based on the first game state and the second game state.
11. The card game matchup system according to embodiment 1,
   wherein the judging portion is configured to judge a win and a loss of the card game as the state of the card game in accordance with the rule of the card game based on the first game state and the second game state.
12. The card game matchup system according to embodiment 2,
   wherein the first game state recognizing portion is configured to recognize the game card operated by the first player and a type of operation on the game card by the first player, as the first game state, and
   the second game state recognizing portion is configured to recognize the game card operated by the second player and a type of operation on the game card by the second player, as the second game state.
13. The card game matchup system according to embodiment 12,
   wherein the first game state recognizing portion is configured to recognize a touching operation by the first player on the game card operated by the first player, and
   the second game state recognizing portion is configured to recognize a touching operation by the second player on the game card operated by the second player.
14. The card game matchup system according to embodiment 12,
   wherein the first game state recognizing portion is configured to recognize an operation by the first player to change an orientation of the game card operated by the first player, and
   the second game state recognizing portion is configured to recognize an operation by the second player to change an orientation of the game card operated by the second player.
15. The card game matchup system according to embodiment 12,
   wherein the first game state recognizing portion is configured to recognize an operation by the first player to overlap the game card operated by the first player, and
   the second game state recognizing portion is configured to recognize an operation by the second player to overlap the game card operated by the second player.
16. The card game matchup system according to embodiment 12,
   wherein the first game state recognizing portion is configured to recognize an operation by the first player to turn the game card operated by the first player, and
   the second game state recognizing portion is configured to recognize an operation by the second player to turn the game card operated by the second player.
17. The card game matchup system according to embodiment 12,
   wherein the first game state recognizing portion is configured to recognize an operation by the first player to move the game card operated by the first player to a predetermined area, and
   the second game state recognizing portion is configured to recognize an operation by the second player to move the game card operated by the second player to a predetermined area.
18. The card game matchup system according to one of embodiments 2 to 17,
   wherein the first game state recognizing portion is configured to recognize a type of operation by the first player based on a hand of the first player and/or states of the game card before and after the operation.
19. The card game matchup system according to embodiment 12,
   wherein the card game is a turn-based game, and
   the judging portion is configured to recognize an end of a turn of the first player in accordance with the rule of the card game based on the first game state, and recognize an end of a turn of the second player in accordance with the rule of the card game based on the second game state.
20. The card game matchup system according to embodiment 1,
   wherein the card game is a turn-based game, and
   the card game matchup system further comprises:
      a first turn switching instructing portion configured such that the first player instructs a switch of a turn; and
      a second turn switching instructing portion configured such that the second player instructs a switch of a turn, and
      wherein the judging portion is configured to switch the turn in response to an instruction to the first turn switching instructing portion and the second turn switching instructing portion.
21. The card game matchup system according to embodiment 1,
   wherein the card game is a turn-based game,
   the first game state recognizing portion is configured to recognize a content of the game card placed in the first field as a state of the game card placed in the first field,
   the second game state recognizing portion is configured to recognize a content of the game card placed in the second field as a state of the game card placed in the second field, and
   the judging portion is configured to switch a turn based on the content of the game card placed in the first field, the content of the game card placed in the second field, and an operation to draw the game card.
22. The card game matchup system according to embodiment 1,
   wherein the first game state recognizing portion is configured to recognize a type of area on which the game card of is located, for each of a plurality of game cards, based on a relative positional relation of the plurality of game cards in the first field and/or a content of the game card in the first field, and
   the second game state recognizing portion is configured to recognize a type of area on which the game card is located, for each of a plurality of game cards, based on a relative positional relation of the plurality of game cards in the second field and/or a content of the game card in the second field.
23. The card game matchup system according to embodiment 1,
   wherein the first game state recognizing portion is configured to recognize a content of the game card placed in the first field, as a state of the game card placed in the first field,
   the second game state recognizing portion is configured to recognize a content of the game card placed in the second field, as a state of the game card placed in the second field, and
   the judging portion is configured to recognize a target to which the game card placed in the first field affects and a target to which the game card placed in the second field affects, as the state of the card game, based on the content of the game card placed in the first field and the content of the game card placed in the second field.
24. The card game matchup system according to embodiment 1,
   wherein the first game state recognizing portion is configured to recognize a content of the game card placed in the first field, as a state of the game card placed in the first field,
   the second game state recognizing portion is configured to recognize a content of the game card placed in the second field, as a state of the game card placed in the second field, and
   the judging portion is configured to provide the first player and the second player with an option in the card game based on the content of the game card placed in the first field and the content of the game card placed in the second field.
25. The card game matchup system according to embodiment 1,
   wherein the judging portion is configured to further generate guide information based on the state of the card game.
26. The card game matchup system according to embodiment 1, further comprising:
   the first player image acquiring portion is configured to acquire a first player image obtained by imaging the first player; and
   the second player image acquiring portion is configured to acquire a second player image obtained by imaging the second player,
   wherein the first game state recognizing portion is configured to recognize a motion of the first player by performing image recognition on the first player image using artificial intelligence,
   the second game state recognizing portion is configured to recognize a motion of the second player by performing image recognition on the second player image using artificial intelligence, and
   the judging portion is configured to judge the state of the card game based on the motion of the first player and the second player.
27. The card game matchup system according to embodiment 1, further comprising an image information generating portion configured to generate judgment screen information to indicate a judging result by the judging portion.
28. The card game matchup system according to embodiment 1, further comprising:
   a third image acquiring portion configured to acquire a third image obtained by imaging a third field where the third player places a third player's own game card to play the card game; and
   a third game state recognizing portion configured to recognize a third game state including a state of the game card placed in the third field, by performing image recognition on the third image using artificial intelligence, and
   wherein the judging portion is configured to further judge the state of the card game based on the third game state as well.
29. The card game matchup system according to embodiment 1, further comprising a recording device configured to record a log of the card game.
30. A card game matchup system used for a card game in which a first player and a second player each places a game card on a field and operates the placed game card, comprising:
   an image acquiring portion configured to acquire an image obtained by imaging a first field where the first player places a first player' own game card to play the card game and a second field where the second player places a second player' own game card to play the card game;
   a game state recognizing portion configured to recognize a game state including a state of the game cards placed in the first field and the second field, by performing image recognition on the image using artificial intelligence; and
   a judging portion configured to judge a state of the card game in accordance with a rule of the card game based on the game state.
31. A card game matchup system used for a card game in which a first player and a second player each places a game card on a field and operates the placed game card, comprising:
   a first image acquiring portion configured to acquire a first image obtained by imaging a first field where the first player places a first player' own game card to play the card game;
   a first game state recognizing portion configured to recognize a first game state including a state of the game card placed in the first field, by performing image recognition on the first image using artificial intelligence;
   a second game state determining portion configured to a second game state including a state of the game card of the second player, based on a random number and/or by inputting the first game state into artificial intelligence; and
   a judging portion configured to judge a state of the card game in accordance with a rule of the card game based on the first game state and the second game state.
32. A card game matchup system used in a card game played by placing a game card on a field and operating on the placed game card, comprising:
   a first game state determining portion configured to determine a first game state including a state of a game card of a first player;
   a second game state determining portion configured to determine a second game state including a state of a game card of a second player; and
   a judging portion configured to judge a state of the card game in accordance with a rule of the card game based on the first game state and the second game state, and
   wherein the first game state determining portion is configured to determine the first game state to be taken next by inputting the first game state and the second game state to artificial intelligence, and
   the second game state determining portion is configured to determine the second game state to be taken next by inputting the first game state and the second game state to the artificial intelligence, and
   wherein the card game matchup system further comprises a learning portion configured to perform learning to the artificial intelligence based on the state of the card game.
33. A card game matchup system used for a card game in which a first player and a second player each places a game card on a field and operates the placed game card,
   wherein the game card includes a built-in RFID tag configured to store a content of the game card, and
   the card game matchup system comprises:
      a first reading portion configured to read the RFID tag within the game card in a first field where the first player places a first player's own game card to play the card game;
      a second reading portion configured to read the RFID tag within the game card in a second field where the second player places a second player's own game card to play the card game; and
      a judging portion configured to judge a matchup situation of the card game in accordance with a rule of the card game based on a reading result by the first reading portion and a reading result by the second reading portion.

## Claims

1. A card game matchup system used for a card game in which a first player and a second player each places a game card on a field and operates the placed game card, comprising:
a first image acquiring portion configured to acquire a first image obtained by imaging a first field where the first player places a first player' own game card to play the card game;
a second image acquiring portion configured to acquire a second image obtained by imaging a second field where the second player places a second player' own game card to play the card game;
a first game state recognizing portion configured to recognize a first game state including a state of the game card placed in the first field, by performing image recognition on the first image using artificial intelligence;
a second game state recognizing portion configured to recognize a second game state including a state of the game card placed in the second field, by performing image recognition on the second image using artificial intelligence; and
a judging portion configured to judge a state of the card game in accordance with a rule of the card game based on the first game state and the second game state.

2. The card game matchup system according to claim 1,
wherein the first game state further includes an operation on the game card in the first field by the first player, and the second game state further includes an operation on the game card in the second field by the second player.

3. The card game matchup system according to claim 1,
wherein the first image acquiring portion is configured to acquire the first image by receiving the first image through a communication network, and
the second image acquiring portion is configured to acquire the second image by receiving the second image through a communication network.

4. The card game matchup system according to claim 1,
wherein the first image acquiring portion is configured to acquire a plurality of first images imaged continuously while the card game is being played, as the first image, and
the second image acquiring portion is configured to acquire a plurality of second images imaged continuously while the card game is being played, as the second image.

5. The card game matchup system according to claim 4,
wherein the first game state recognizing portion is configured to recognize an operation on the game card in the first field by the first player, as the first game state, based on a change of the game card in the first field, by performing the image recognition on each of the plurality of first images, and
the second game state recognizing portion is configured to recognize an operation on the game card in the second field by the second player, as the second game state, based on a change of the game card in the second field, by performing the image recognition on each of the plurality of second images.

6. The card game matchup system according to claim 4,
wherein the first game state recognizing portion is configured to recognize the first game state by performing motion recognition on the plurality of first images, and
the second game state recognizing portion is configured to recognize the second game state by performing motion recognition on the plurality of second images.

7. The card game matchup system according to claim 2,
wherein the first game state recognizing portion is configured to recognize the first game state in accordance with the rule of the card game based on the game card placed in the first field and/or the operation on the game card by the first player in the first field, and
the second game state recognizing portion is configured to recognize the second game state in accordance with the rule of the card game based on the game card placed in the second field and/or the operation on the game card by the second player in the second field.

8. The card game matchup system according to claim 1,
wherein the judging portion is configured to judge a violation of the rule of the card game as the state of the card game in accordance with the rule of the card game based on the first game state and the second game state.

9. The card game matchup system according to claim 1,
wherein the judging portion is configured to judge a matchup situation of the card game as the state of the card game in accordance with the rule of the card game based on the first game state and the second game state.

10. The card game matchup system according to claim 1,
wherein the judging portion is configured to calculate scores of the first player and the second player as the state of the card game in accordance with the rule of the card game based on the first game state and the second game state.

11. The card game matchup system according to claim 1,
wherein the judging portion is configured to judge a win and a loss of the card game as the state of the card game in accordance with the rule of the card game based on the first game state and the second game state.

12. The card game matchup system according to claim 2,
wherein the first game state recognizing portion is configured to recognize the game card operated by the first player and a type of operation on the game card by the first player, as the first game state, and
the second game state recognizing portion is configured to recognize the game card operated by the second player and a type of operation on the game card by the second player, as the second game state.

13. The card game matchup system according to claim 12,
wherein the first game state recognizing portion is configured to recognize a touching operation by the first player on the game card operated by the first player, and
the second game state recognizing portion is configured to recognize a touching operation by the second player on the game card operated by the second player.

14. The card game matchup system according to claim 12,
wherein the first game state recognizing portion is configured to recognize an operation by the first player to change an orientation of the game card operated by the first player, and
the second game state recognizing portion is configured to recognize an operation by the second player to change an orientation of the game card operated by the second player.

15. The card game matchup system according to claim 12,
wherein the first game state recognizing portion is configured to recognize an operation by the first player to overlap the game card operated by the first player, and
the second game state recognizing portion is configured to recognize an operation by the second player to overlap the game card operated by the second player.
